# EUROPEAN PATENT SPECIFICATION

(11) **EP 3 593 934 B1**
(45) Date of publication and mention of the grant of the patent: **15.02.2023**
(21) Application number: 17872885.3
(22) Date of filing: 17.10.2017
(51) Int. Cl.: B23K 26/08, B23K 26/16, B23K 26/38, B23K 37/04

(54) **CARRYING PLATFORM, CUTTING METHOD THEREFOR AND PROCESSING DEVICE**
TRÄGERPLATTFORM, SCHNEIDVERFAHREN DAFÜR UND VERARBEITUNGSVORRICHTUNG
PLATEFORME DE TRANSPORT, PROCÉDÉ DE COUPE ASSOCIÉ ET DISPOSITIF DE TRAITEMENT

(30) Priority: 10.03.2017 CN 201710142618
(43) Date of publication of application: 15.01.2020
(73) Proprietor: BOE Technology Group Co., Ltd., Beijing 100015 (CN); Hefei Xinsheng Optoelectronics Technology Co., Ltd., Xinzhan Industrial Park Hefei Anhui 230012 (CN)
(72) Inventor: TAO, Sheng, Beijing 100176 (CN); ZHU, Wenlong, Beijing 100176 (CN); XU, Qingyang, Beijing 100176 (CN); LI, Yunze, Beijing 100176 (CN); WANG, Zuliang, Beijing 100176 (CN)
(74) Representative: Klunker IP Patentanwälte PartG mbB
(86) International application number: PCT/CN2017/106518
(87) International publication number: WO 2018/161570

(56) References cited:
- CN-A- 105 910 888
- CN-U- 202 071 206
- CN-U- 203 679 528
- CN-Y- 200 939 548
- US-A- 4 156 376
- US-A- 4 934 235
- US-A1- 2017 050 876

## Description

### TECHNICAL FIELD

The present invention relates to a stage for cutting process and a cutting method thereof, and a processing apparatus.

### BACKGROUND

For a current stage used for a cutting process, the foreign matters/materials on the stage need to be removed after the cutting process is performed. If the foreign matters on the stage are not cleared, when a flat plate placed on the stage is subjected to a cutting process, for example, these foreign materials may cause scratches on the flat plate, and further the part of the flat plate corresponding to the foreign matters may rise making the flat plate be unevenly placed, which causes the flat plate to be misaligned or fragmented during the cutting process, thereby affecting the cutting yield of the flat plate.

Although a device for removing foreign matters is provided in the current stage structure, the ability of the device to remove foreign matter on the stage is limited, so it is difficult to improve the cutting yield rate of the product, and the complicated design structure of the current stage limits its automation capability, influencing production capacity.

US 4 934 235 A1 discloses a shearing machine in which an upper shearing blade can be adjusted and positioned. The upper blade is held on a pivotal plate member which is pivotally held on a ram by means of a hinge to be rotated to adjust of the position of the upper blades. In addition, a hold down member is provided for holding a work-sheet. The hold down member is arranged to be urged by a toggle joint to hold the work-sheet at a reduced speed with an increased force after coming into contact with the work-sheet. A scrap removal member is also included in the shearing machine such that scraps can be easily removed without mingling them with the finished sheets. The scrap removal member removes scrap without idle time between feeding the work-sheets to be sheared. The shearing machine is so arranged that scraps are taken away directly to a scrap box as soon as the work-sheet has been complete sheared into its finished product.

### SUMMARY

It is an object of the present invention to provide a stage for cutting process, and a cutting method thereof, and a processing apparatus.

The object is achieved by the features of the respective independent claims. Further embodiments are defined in the corresponding dependent claims. Even though the description refers to embodiments or to the invention, it is to be understood that the invention is defined by the claims and embodiments of the invention are those comprising at least all the features of one of the independent claims.

### BRIEF DESCRIPTION OF THE DRAWINGS

FIG. 1a is a schematic view of a stage for cutting process;
FIG. 1b is a schematic view of another stage for cutting process;
FIG. 1c is a schematic view of still another stage for cutting process;
FIG. 2a is a side view of a stage for cutting process according to an embodiment of the present disclosure;
FIG. 2b is a top view of the stage for cutting process as illustrated in FIG. 2a;
FIG. 3 is a process diagram of an operating method applied to a stage for cutting process according to an embodiment of the present disclosure; and
FIGS. 4a to 4e are process diagrams for removing foreign matters on a stage according to an embodiment of the present disclosure.

### DETAILED DESCRIPTION

In order to make objects, technical details and advantages of the embodiments of the disclosure apparent, the technical solutions of the embodiment will be described in a clearly and fully understandable way in connection with the drawings related to the embodiments of the disclosure.

Unless otherwise defined, all the technical and scientific terms used herein have the same meanings as commonly understood by one of ordinary skill in the art to which the present disclosure belongs. The terms, such as "first," "second," or the like, which are used in the description and the claims of the present disclosure, are not intended to indicate any sequence, amount or importance, but for distinguishing various components. The terms, such as "comprise/comprising," "include/including," or the like are intended to specify that the elements or the objects stated before these terms encompass the elements or the objects and equivalents thereof listed after these terms, but not preclude other elements or objects. The terms, such as "connect/connecting/connected," "couple/coupling/coupled" or the like, are not limited to a physical connection or mechanical connection, but may include an electrical connection/coupling, directly or indirectly. The terms, "on," "under," "left," "right," or the like are only used to indicate relative position relationship, and when the position of the object which is described is changed, the relative position relationship may be changed accordingly.

The methods of clearing foreign matters on a stage may comprise air gun cleaning, brush cleaning, belt drive cleaning, and the like, the above-mentioned methods for removing foreign matters on the stage suffer from problems such as wasting labor, damaging brush and conveyor belt, difficulty in cleaning, and the like, and is not able to improve the cutting yield of the stage for cutting products such as flat plates while performing automated production.

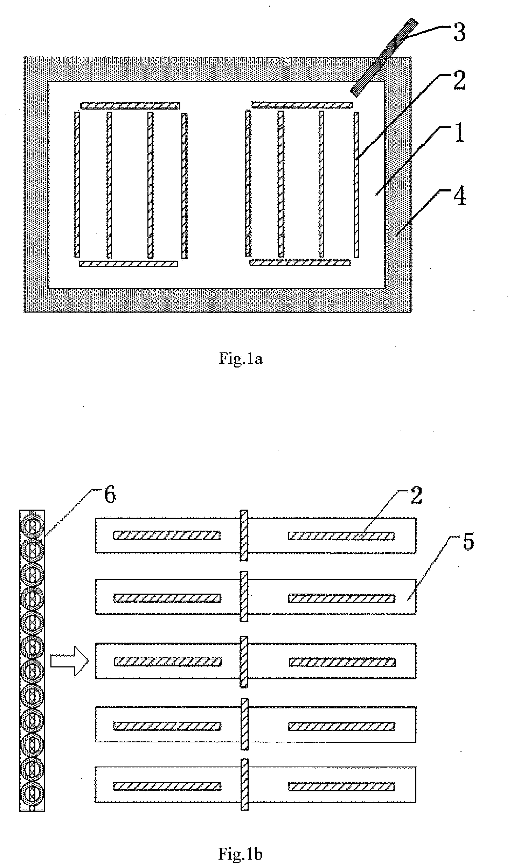

FIG. 1a is a schematic view of a stage for cutting process, and the method of clearing foreign matters adopted by the stage is air gun cleaning. For example, as illustrated in FIG. 1a, after the processing operations such as cutting upon a flat plate is performed on the stage, useful divided plates are removed, the remaining cutting scraps of the flat plate on the stage become foreign matters 2, and the foreign matters 2 on the work table 1 is blown by an air gun 3 into a collection tank 4 provided around the table 1 to achieve the cleaning of the table 1 of the stage. This method is mainly applied to a semi-automatic carbon dioxide laser single-unit cutting machine. Using of the air gun requires manual operation, and therefore this method is labor intensive and cannot realize automated production operation of the stage and increase cost.

FIG. 1b is a schematic view of another stage for cutting process, and the method of clearing foreign matters on the stage is brush cleaning. After a process such as cutting a flat plate is performed on the stage, first individual divided plates which has undergone cutting, and remaining scraps such as foreign matters fall onto a work table or a belt for transmission, and then, for example, as illustrated in FIG 1b, a brush 6 sweeps away foreign matters 2 on the work table or the belt 5 (the drawing shows the belt 5). This method is mainly applied to a wheel cutting machine in the TFT (Thin Film Transistor) display industry, foreign matters 2 may be remained or scattered in the process of sweeping the foreign matters 2 with the brush 6, affecting the stability of the equipment, and wear and tear of the brush 6 is severe during the removal of foreign matters 2.

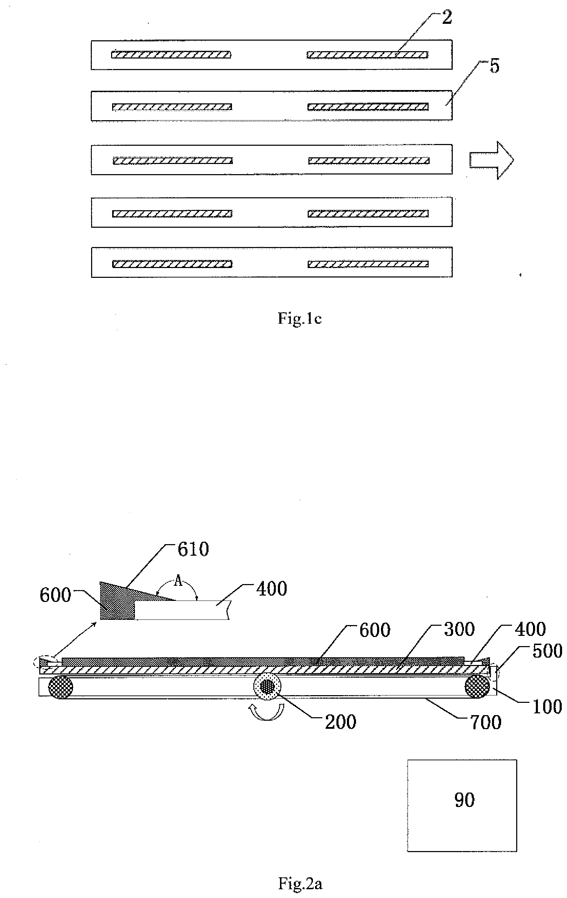

FIG. 1c is schematic view of another stage for cutting process, and the method of clearing foreign matters on the stage is belt drive cleaning. For example, as illustrated in FIG. 1c, during the transmission process of the belt 5, the foreign matters 2 scattered on the belt 5 will fall off by themselves. However, in this method, the problem that the belt 5 is easily worn during the removal of the matters 2 is caused, and the foreign matters 2 having relatively small volumes may still adhere to the belt 5 but not drop, so the method cannot achieve the purpose of complete removal of the foreign matters 2, and the cost is greater because it is easy to consume materials.

At least one embodiment of the present disclosure relates to a stage for cutting process and cutting method thereof, a processing apparatus. The stage comprises a support substrate and a driving unit disposed on the support substrate, and the driving unit is configured to drive the support substrate to rotate around a first direction in a board surface of the support substrate so as to remove foreign matters on the support substrate. For example, the first direction is in a direction of the board surface of the support substrate and parallel to the board surface of the support substrate. That is, the first direction is a rotation axis of the support substrate, because the support substrate has a flat plate shape, the rotation axis can be any direction parallel to a flat plane of the support substrate, the present disclosure does not limit the first direction as long as it is suitable to rotate the support substrate. The driving unit disposed in the stage can drive the rotation of the support substrate to automatically slide the foreign matters on the support substrate, so the support substrate can automatically clean the foreign matters and improve the cutting yield of the product.

In the following, a stage for cutting process and cutting method thereof according to at least one embodiment of the present disclosure will be described with reference to accompanying drawings.

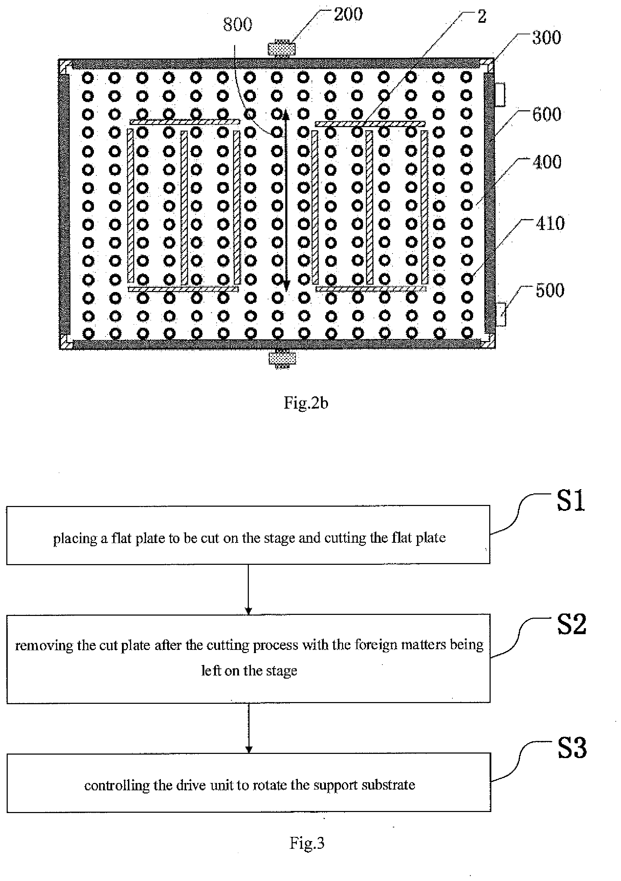

At least one embodiment of the present disclosure provides a stage for cutting process. FIG. 2a is a side view of a stage for cutting process according to an embodiment of the present disclosure. For example, as illustrated in FIG. 2a, the stage comprises a support substrate 100 and a driving unit 200 disposed on the support substrate 100. The driving unit 200 can drive the support substrate 100 to rotate around a first direction 800 so as to make the support substrate 100 to be tilted, so the foreign matters on the support substrate 100 can slide by themselves, and the first direction 800 is within the board surface of the support substrate 100 and is parallel to the board surface of the support substrate 100; as illustrated in FIG. 2b, the first direction 800 can be the width direction of the carrier stage, that is, the first direction 800 can be the axial direction of the driving unit 200 of the example in the drawing. FIG. 2a is a side view of the stage as illustrated in FIG. 2b along the first direction 800.

Exemplarily, the stage provided by the present disclosure can be used in the cutting process for any object, for example, the object to be cut may be a flat plate, and the flat plate may be an uncut entire display substrate (motherboard), the display substrate may include a plurality of sub-boards (an array substrate or a color filter substrate for one display panel) that are arranged side by side and a dummy area arranged around the sub-boards; during cutting process, the sub-boards and the dummy areas are separated and after the sub-boards are removed, the dummy area remains on the support substrate 100 as waste (foreign matters) to be removed. For example, taking the first direction 800 as a reference, the driving unit 200 drives the support substrate 100 to rotate around the first direction 800 so that the support substrate 100 starts to tilt from the horizontal direction, and foreign matters on the support substrate 100 fall off from the support substrate 100 under an influence of gravity. The stage in the above-mentioned structure has advantages such as simple removal of foreign materials, high degree of automation, less consumables, no need for human intervention, and reducing production costs while increasing production capacity.

In the embodiments of the present disclosure, the object that is subjected to cutting process on the stage is not limited to a flat plate, and the type of the flat plate is not limited to the display substrate as above-mentioned, and the flat plate can also be a display panel, a glass substrate, a flexible substrate, or the like, and there is no limitation on the type of the flat plate on the stage for cutting in the embodiments of the present disclosure. The following will describe the contents of the embodiments of the present disclosure by taking a flat plate as an object on the stage for the cutting process.

It should be noted that the rotation direction of the driving unit 200 driving the support substrate 100 is not limited to clockwise rotation with reference to the first direction 800 as illustrated in FIG. 2b, but may also be counterclockwise rotation with reference to the first direction; the driving unit 200 is not limited to be disposed in the middle of the support substrate 100 as illustrated in FIG. 2a, for example, may also be disposed at any end of the support substrate 100. The center of rotation of the support substrate 100 is not limited to the position of the driving unit 200, as long as the driving unit 200 can tilt the support substrate 100, for example, rotating around the first direction 800, so as to obtain the technical effect of improving the automated cleaning of the stage in the equipment because the foreign matters fall off due to the effect such as weightlessness.

For example, in at least one embodiment of the present disclosure, the drive unit 200 can be implemented in a variety of ways, and for example the drive unit 200 can be a rotary electrical motor. For example, the rotary electrical motor can be a control electrical motor or a power electrical motor or the like. For example, the control electrical motor may be a servo motor, a stepping motor, or a torque motor; and, for example, the power electrical motor can be a direct current motor, an asynchronous motor or a synchronous motor or the like. The drive unit may be disposed adjacent to the support substrate or disposed separately from the support substrate. When the drive unit and the support substrate are separately disposed, the drive unit can drive the support substrate to rotate around a rotation axis through a chain, a belt, a gear, or the like. In the embodiments of the present disclosure, the type of the driving unit 200 and the specific working method are not limited as long as the driving unit 200 can drive the support substrate 100 to rotate.

For example, in at least one embodiment of the present disclosure, the flat plate to be cut may be a metal panel, a non-metal panel, or a panel formed with functional components. Exemplarily, the metal panel may be an electrogalvanized steel sheet, a hot dip galvanized steel sheet, an aluminized zinc steel sheet, or a copper plate for example; the non-metal panel may be a glass panel, a quartz panel, a ceramic panel, a plastic panel or a silicone panel, or the like for example; the panel formed with functional components may be a liquid crystal display panel, an OLED display panel or an electronic paper display panel for example.

For example, in the embodiments of the present disclosure, there is no limitation on the angle range of rotation of the support substrate driven by the unit 200, that is, the angle range of rotation of the support substrate 100 may include 0-360 degrees, for example, 0-180 degrees, 0~90 degrees or 60~80 degrees, or the like. Exemplarily, with the first direction above-mentioned as a reference, when the range of rotation of the support substrate exceeds 90 degrees, the gravity will completely act on the sliding of the foreign matters without being affected by resistance such as friction, in which case the foreign matters on the substrate is easier to be cleared. The angle when the carrying base is not rotated is zero degree, the angle vertical to the state that the carrying base is not rotated is 90 degrees, and the angle at which the substrate is fully inverted is 180 degrees, and the angle may be clockwise or counterclockwise. For example, the angle is 0 degree when the support substrate horizontally faces up, or 90 degrees when the support substrate is in a vertical state, or 180 degrees when the support substrate is horizontally back up, and so on.

For example, in at least one embodiment of the present disclosure, as illustrated in FIG. 2a, the stage may further comprise a carrier plate 300 disposed on the support substrate 100. For example, the carrier plate 300 can be used to support a flat plate to be cut. The carrier plate 300 may be a rigid substrate such as a metal substrate, which can provide support for the flat plate while avoiding bending the flat plate during the process such as conveying or cutting, thereby ensuring that the cutting positions of the flat panel are in a same plane, thereby improving the cutting yield rate for the flat plate.

It should be noted that in the case where the carrier plate 300 is disposed on the support substrate 100 of the stage, the flat plate is subjected to a process such as cutting on the carrier plate 300, so foreign matters fall on the carrier plate. In this case, the above-mentioned operation for clearing the foreign matters on the support substrate by the stage should be removing of the foreign matters on the carrier plate.

For example, in at least one embodiment of the present disclosure, as illustrated in FIG. 2a, the stage may further comprise a conveyor belt 700 disposed on the support substrate 100. For example, the conveyor belt 700 is configured to convey the carrier plate 300 so as to improve automation ability of the stage. Exemplarily, after the stage finishes the operation of removing foreign matters on the carrier plate 300, the conveyor belt 700 conveys the cleaned carrier plate 300 to a next process. For example, the next process can comprise placing a new plate to be processed on the carrier plate 300, then the conveyor belt 700 conveys the carrier plate 300 supporting the flat plate onto the support substrate 100, and then the process such as cutting, cleaning or the like continue. Because the conveyor belt 700 is disposed in the stage, automation among different processes can be realized on basis of automatic operations such as cutting and cleaning, thereby saving costs and improving production efficiency. There are no limitations upon the transmission method of the conveyor belt 700 in the embodiments of the present disclosure; for example, the transmission method of the conveyor belt 700 may include belt transmission, gear transmission, chain transmission, cylinder telescopic transmission, wheel transmission, or the like.

For example, in the stage according to at least one embodiment of the present disclosure, as illustrated in FIG. 2a, a fixture structure such as a first stop plate 500 or a boss or the like for limiting the carrier plate 300 is disposed on the support substrate 100. For example, the fixture structure such as the first stop plate 500 not only can fix the carrier plate 300 on the support substrate 100, but also can accurately limit the carrier plate 300. Exemplarily, during the rotation of the support substrate 100 driven by the driving unit 200, the first stop plate 500 can fix the carrier plate 300 to prevent it from loosening or falling; during performing the process such as cutting the flat plate on the carrier plate 300, the first stop plate 500 can limit the carrier plate 300 to a position required by a specific process, thereby ensuring the precision of the cutting process. For example, the first stop plate 500 is formed separately from the support substrate 100 and then they are assembled together or integrally formed.

In embodiments of the present disclosure, there is no limitation on the methods by which the stage fixes the flat plate to be cut. For example, there are various methods for the stage to fix the flat plate, for example, the flat plate can be fixed by vacuum adsorption in order to improve the automation ability of the stage.

FIG. 2b is a top view of the stage for cutting process as illustrated in FIG. 2a. For example, in the stage provided in at least one embodiment of the present disclosure, as illustrated in FIG. 2a and FIG. 2b, the stage may further include a cover plate 400 disposed on the carrier plate, and for example, the cover plate 400 may be used to support and fix the flat plate to be cut. A plurality of openings 410 for providing vacuum adsorption are disposed in the cover plate 400, and for example, these openings 410 may communicate with a vacuum suction equipment. Exemplarily, after the flat plate to be cut is placed on the cover plate 400, during the process of the conveyor belt 700 moving the carrier plate 300 and the components placed on the carrier plate, the vacuum adsorption provided by the cover plate 400 can hold the flat plate on the cover plate 400 in order to prevent the plate from moving. Also, during the process of performing such as cutting process for the flat plate, the vacuum adsorption can also hold the flat plate on the cover plate 400 so as to prevent problems such as poor cutting due to movement of the flat plate which is caused by the cutting action of the cutter wheel. The cover plate 400 may also be provided with a structure for electrostatic adsorption for example to hold the plate on the cover plate 400 so as to prevent the plate from moving.

For example, in the stage provided in at least one embodiment of the present disclosure, as illustrated in FIG. 2a, the second stop plate 600 fixing the cover plate 400 can also be disposed on the carrier plate 300. The second stop plate 600 can not only fix the cover plate 400 on the carrier plate 300 but also limit the cover 400. Exemplarily, in the process of the drive unit 200 driving the support substrate 100 to rotate, the second stop plate 600 can fix the cover plate 400 to prevent the cover plate 400 from loosening or falling; for example, in the process of cutting the flat plate on the cover plate 400, the second stop plate 600 can limit the cover plate 400 to a position required by a specific process so as to ensure the precision of the cutting process.

For example, in the stage provided in at least one embodiment of the present disclosure, as illustrated in FIG. 2a, the surface of the second stop plate 600 away from the support substrate 100 can be formed to be an inclined surface, thus the angle between the surface of the second stop plate 600 facing away from the support substrate 100 and the surface of the cover plate 400 may be an obtuse angle, so the foreign matters on the cover plate 400 can easily fall off. Exemplarily, after the stage completes the cutting process on the flat plate, the driving unit 200 drives the carrying substrate 100 to rotate so that the foreign matters on the cover plate 400 slide down, and when the foreign matters slide down to an edge of the cover plate 400, the second stop plate 600 protrudes over the cover plate 400 and blocks the foreign objects that are falling because that the cover plate 400 needs to be fixed by the second stop plate 600, but when the angle A between an oblique edge 610 of the second plate 600 and the cover plate 400 is an obtuse angle, the resistance of the second stop plate 600 to the falling of foreign matters can be reduced so that foreign matters can easily slide off the cover plate 400. It should be noted that the oblique edge 610 is not limited to be a straight line illustrated in FIG. 2a, and may also be an arc or the like, as long as the angle A between the tangent of the portion of the oblique edge 610 near the cover 400 and the cover plate 400 is an obtuse angle.

It should be noted that, in embodiments of the present disclosure, there is no limitation on the number of the second stop plate(s) 600 having an oblique surface as illustrated in FIG. 2a in the stage. Exemplarily, all the second stop plates 600 on the stage can be configured to have a structure having the oblique surface; only one of the second stop plates 600 of the stage may also be configured to have a structure having the oblique surface. The second stop plate 600 with the oblique surface may be located where the foreign matters slide. Exemplarily, the second pallet 600 with the oblique surface may be close to the recovery unit 90 described in the following embodiments, so the foreign matters slide from the stage into the recovery unit 90.

In embodiments of the present disclosure, there is no limitation on the location of the cover plate 400. For example, the cover plate 400 may be disposed on the carrier plate 300, and may also be disposed on the support substrate 100, as long as the cover plate 400 can provide means such as vacuum adsorption to fix the flat plate. Exemplarily, when the carrier plate 300 is disposed on the support substrate 100 of the carrier provided in the embodiments of the present disclosure, the cover plate 400 may be disposed on the carrier plate 300; when the carrier plate 300 is not disposed on the support substrate 100 of the stage provided in the embodiments of the present disclosure, the cover plate 400 may be directly disposed on the support substrate 100, in this case, the first stop plate 500 is used to fix the cover plate 400, and characteristics of the first carrier 500, such as shape thereof, may be referred to the design structure of the second stop plate 600 as illustrated in FIG. 2a.

For example, in at least one embodiment of the present disclosure, as illustrated in FIG. 2a, the stage may further comprise a recovery unit 90. The recovery unit 90 may be disposed on the side of the stage where the support substrate 100 is disposed, and the recovery unit 90 can recycle the foreign matters removed from the substrate 100. Exemplarily, the recovery unit 90 may be a crusher which can crush the foreign matters sliding down from the support substrate, thereby reducing the space occupied by the foreign matters and facilitating transportation. The stage of this embodiment can also be provided with a recovery unit on each side.

It should be noted that in the stage provided in the embodiments of the present disclosure, there is a high standard on the surface roughness of the surface directly touching the flat plate to be cut. Exemplarily, taking the above-mentioned stage with the cover plate 400 provided in the embodiments for an example, the surface of the cover plate 400 facing away from the support substrate 100 has high microscopic roughness and low macroscopic roughness, high microscopic roughness of the surface of the cover plate can prevent the micro foreign materials on the cover plate from slipping off due to adsorption effect, and low macroscopic roughness of the surface of the cover plate can ensure that the flat plate is placed smoothly on the cover plate 400 to ensure that positioning is accurate and the plate will not be scratched during the cutting process, thereby improving the ability to drop the foreign matters while ensuring the cutting yield.

At least one embodiment of the present disclosure provides a processing apparatus, and the processing apparatus comprises the stage according to any one of the embodiments above-mentioned.

For example, in at least one embodiment of the present disclosure, the processing apparatus may further comprise a cutting head, and the cutting head can be used to cut a flat plate on a support substrate. For example, the cutting head may be a component or a device such as a wheel cutting head, a wire cutting head, a laser cutting head, or the like.

At least one embodiment of the present disclosure provides a cutting method applied to the stage. The method comprises: placing an object to be cut on the stage and performing a cutting operation on the object; removing the object after the object has been cut; controlling the driving unit to drive the support substrate to rotate to remove foreign matters on the support substrate. The drive unit disposed on the stage can drive the stage to rotate to allow the foreign matters to slide off from the stage automatically, which can improve the automation ability of the stage and the clearance rate of foreign matters.

In the following, taking that the object to be cut is a flat plate for an example to describe the cutting method of the stage in following embodiments of the present disclosure.

FIG. 3 is a process diagram of an operating method applied to a stage for cutting process according to an embodiment of the present disclosure. For example, as illustrated in FIG. 3, the method for cutting the stage provided by at least one embodiment of present disclosure includes the following process:

A flat plate to be cut is placed on the stage and the flat plate is cut.

For example, the flat plate may include at least one sub-plate and a dummy area around the sub-plate(s), and the stage separates the sub-plate(s) and the dummy area by the cutting process.

The cut plate (sub-plates) is removed after the cutting process, and the foreign matters are left on the stage.

For example, the sub-plates can be removed by an adsorption device, which can reduce scratches on the sub-plates during their movement. The dummy area that is cut and separated from the flat plate remains, as foreign matters, on the support substrate.

The drive unit is controlled to rotate the support substrate.

After the drive unit drives the support substrate to rotate, the foreign matters on the support substrate slide down because the support substrate is tilted, this method for removing the foreign matters is simple and does not require human intervention, easily improving the automation ability of the stage.

For example, in the cutting method provided by at least one embodiment of the present disclosure, after the support substrate is rotated to at least one preset angle, at least one counterclockwise and/or clockwise reciprocating movement is conducted with reference to the at least one preset angle. This reciprocating movement can be understood as that the driving unit drives the support substrate to shake around each preset angle, which can make the foreign matters on the carrying substrate loose and easier to slide off. Compared with the existing method of removing foreign matters on a stage, the method has an effect of better removing foreign matters and makes the stage have higher cutting yield on the flat plate. For example, taking the existing methods such as that using brush or air gun to clean foreign matters on a stage for example, the existing methods can make the cutting yield rate of the stage to be 99.2% to 99.5%; in contrast, the cleaning method for cleaning foreign matters in the cutting method provided by above-mentioned embodiments of the present disclosure can make the cutting yield rate of the stage on the flat plate reach up to 99.5% and above.

For example, in the cutting method provided in at least one embodiment of the present disclosure, the preset angle of the support substrate may be in the range of 0 - 360 degrees, that is, the driving unit can rotate the support substrate and fix the support substrate to any angle. For example, the value of the preset angle may be about 20 degrees, about 45 degrees, about 85 degrees, about 95 degrees, or the like. When the support substrate is reciprocated around the above-mentioned preferred preset angles, the removal rate of the foreign matters on the support substrate becomes the highest, and the cutting yield of the support substrate on the flat plate can also reach about 99.8% or more.

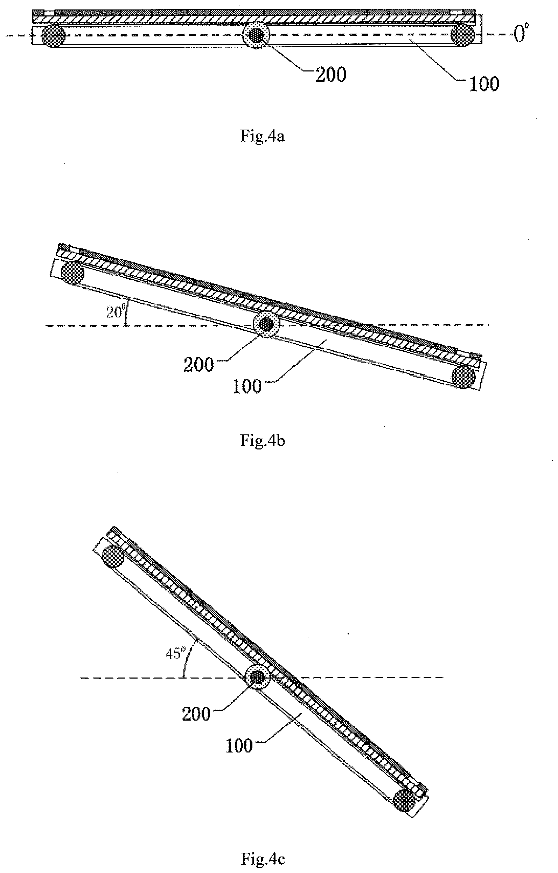

FIGS. 4a to 4e are process diagrams for removing foreign matter on a stage according to an embodiment of the present disclosure. In the following, as illustrated in FIGS. 4a to 4e, the value of the preset angles for rotating the support substrate may be about 20 degrees, about 45 degrees, about 85 degrees, or about 95 degrees, the removal process of the foreign matter on the stage may include the following process.

As illustrated in FIG. 4a, in this situation, the driving unit 200 has not driven the support substrate 100 to rotate. For example, in this situation, the stage has completed the cutting process on the flat plate and the divided sub-plates on the support substrate 100 have been removed, and the cut foreign matters remain on the support substrate 100. Taking that the support substrate 100 is in the horizontal position in this state for example, the deflection angle of the support substrate 100 is 0 degree.

As illustrated in FIG. 4b, the driving unit 200 drives the support substrate 100 to rotates clockwise and make the support substrate 100 stop rotating when the support substrate 100 rotates to an angle of 20 degrees with respect to the horizontal position, and then, for example, one reciprocating movement can be performed. Exemplarily, the support substrate 100 is at an initial position of 20 degrees relative to the horizontal position, the reciprocating process may be one or a combination of the following processes: the support substrate 100 rotates clockwise by a certain angle and then rotates counterclockwise to return to the initial position; or the support substrate 100 rotates counterclockwise by a certain angle and then rotates clockwise to return to the initial position; or the support substrate 100 rotates clockwise by a certain angle and then rotates counterclockwise through the initial position by another certain angle, and then rotates clockwise to return to the initial position; or the support substrate 100 rotates counterclockwise by a certain angle and then rotates clockwise through the initial position by another certain angle, and then returns to the original position by counterclockwise. This reciprocating movement is not limited to one time, and it may be conducted multiple times. Exemplarily, in this process, the deflection angle of the support substrate 100 is small so as to achieve the main purpose of allowing large foreign matters on the support substrate 100 to fall off.

The driving unit 200 is not limited to driving the support substrate 100 to rotate clockwise as illustrated in FIG. 4a to FIG. 4b, and may also drive the support substrate 100 to rotate counterclockwise firstly. In the following, taking that driving unit 200 drives the support substrate 100 to perform clockwise rotation firstly for example, the process of the cutting method in the following embodiments is described.

If the amplitude of the reciprocating movement of the support substrate 100 driven by the drive unit 200 is excessive, the components on the support substrate 100 such as the carrier 300 may become loose. For example, in at least one embodiment of the present disclosure, the deflection angles of the counterclockwise and/or clockwise reciprocating movement of the support substrate 100 may be no more than 5 degrees; within this angle range, not only the components such as the carrier 300 can be avoided from loosening due to the excessive amplitude of the reciprocating movement, but also the foreign matters on the support substrate 100 can become loose and fall off more easily.

As illustrated in FIG. 4c, the driving unit 200 drives the support substrate 100 to rotate until the angle of 45 degrees, and then, for example, the reciprocating movement may be performed one time. Exemplarily, in this process, the deflection angle of 45 degrees and the reciprocating movement can cause the remaining large foreign matters and/or a part of the smaller foreign matters on the support substrate 100 to fall off.

It should be noted that in the embodiments of the disclosure, for example, the operation process corresponding to FIG. 4b can be omitted, and the corresponding operation process of FIG. 4c may be directly performed after the operation process corresponding to FIG. 4a, so big or large foreign matters can slide off in one operation. However, in this process, because the deflection angle of the support substrate 100 is big, for example, large foreign matters with big weight may have large slipping speeds, which may scratch the surface on which they pass. Exemplarily, for example, in the case where the cover plate 400 is disposed on the support substrate 100, large foreign matters may cause scratches on the surface of the cover plate 400.

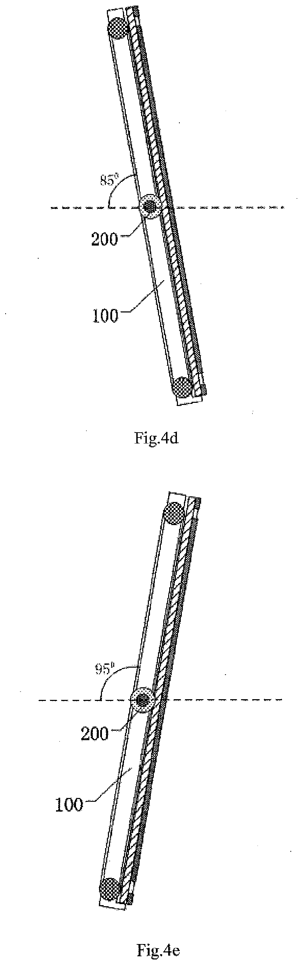

As illustrated in FIG. 4d, the driving unit 200 drives the support substrate 100 to rotate until the preset angle of 85 degrees, and then, for example, one reciprocating movement can be performed. Exemplarily, in the process, the deflection angle of 85 degrees and the reciprocating movement may cause small pieces of foreign matters and/or part of debris-type foreign matters remaining on the support substrate 100 to fall off.

As illustrated in FIG. 4e, the driving unit 200 drives the support substrate 100 to rotate until the preset angle of 95 degrees, and then, for example, one reciprocating motion can be performed. Exemplarily, when the support substrate rotates to the preset angle of 95 degrees, the gravity received by the foreign matters on the support substrate 100 may entirely act on slipping (in this case, falling) of foreign matters without resistance such as friction force or the like. In this process, the foreign matters remained on the support substrate 100 can be completely removed.

The described above are only specific embodiments of the present disclosure, and the present disclosure is not limited thereto. The scope of the present disclosure is defined by the accompanying claims.

## Claims

1. A stage for cutting process, comprising:
a support substrate (100);
a driving unit (200) disposed on the support substrate (100), wherein the driving unit (200) is configured to drive the support substrate (100) to rotate around a first direction (800) in a board surface of the support substrate (100) so as to remove foreign matters on the support substrate (100),
**characterized by**
a carrier plate (300) disposed on the support substrate (100); and
a conveyor belt (700) disposed on the support substrate (100),
wherein the conveyor belt (700) is configured to convey the carrier plate (300).

2. The stage according to claim 1, wherein a first stop plate (500) for limiting the carrier plate (300) is disposed on the support substrate (100).

3. The stage according to any one of claims 1-2, further comprising:
a cover plate (400) disposed on the carrier plate (300),
wherein the cover plate (400) is configured to support and fix a flat plate to be cut.

4. The stage according to claim 3, wherein a second stop plate (600) for limiting the cover plate (400) is disposed on the carrier plate (300).

5. The stage according to claim 4, wherein an angle between a surface of the second stop plate (600) away from the support substrate (100) and a surface of the cover plate (400) is an obtuse angle.

6. The stage according to any one of claims 3-5, wherein a plurality of openings (410) are provided in the cover plate (400) for providing vacuum adsorption.

7. The stage according to any one of claims 1-6, further comprising:
a recovery unit (90) disposed on at least one side of the support substrate (100),
wherein the recovery unit (90) is configured to recover the foreign matters on the support substrate (100).

8. A processing apparatus, comprising the stage according to any one of claims 1 - 7.

9. A cutting method applied to the stage according to any one of claims 1 - 7, comprising:
placing an object to be cut on the stage and performing a cutting operation on the object;
removing the object after the object has been cut; and
controlling the driving unit (200) to drive the support substrate (100) to rotate to remove foreign matters on the support substrate (100).

10. The cutting method according to claim 9, further comprising:
after the support substrate (100) is rotated to at least one preset angle, performing at least one counterclockwise and/or clockwise reciprocating movement with reference to the at least one preset angle.

11. The cutting method according to claim 10, wherein a value of the preset angle comprises 20 degrees, 45 degrees, 85 degrees, or 95 degrees.

12. The cutting method according to any one of claims 10 - 11, wherein a deflection angle of the counterclockwise and/or clockwise reciprocation movement of the support substrate (100) is not greater than 5 degrees.

## Patentansprüche

1. Bühne für einen Schneidvorgang, mit:
einem Stützsubstrat (100);
einer an dem Trägersubstrat (100) angeordneten Antriebseinheit (200), wobei die Antriebseinheit (200) konfiguriert ist, das Trägersubstrat (100) anzutreiben, um sich um eine erste Richtung (800) in einer Plattenoberfläche des Trägersubstrats (100) zu drehen, sodass Fremdkörper auf dem Trägersubstrat (100) entfernt werden,
**gekennzeichnet durch**
eine Trägerplatte (300), die auf dem Stützsubstrat (100) angeordnet ist; und
ein Förderband (700), das auf dem Stützsubstrat (100) angeordnet ist,
wobei das Förderband (700) konfiguriert ist, die Trägerplatte (300) zu transportieren.

2. Bühne nach Anspruch 1, wobei eine erste Anschlagplatte (500) zur Begrenzung der Trägerplatte (300) auf dem Stützsubstrat (100) angeordnet ist.

3. Bühne nach einem der Ansprüche 1 bis 2, ferner mit:
einer Deckplatte (400), die auf der Trägerplatte (300) angeordnet ist,
wobei die Deckplatte (400) konfiguriert ist, eine zu schneidende flache Platte zu stützen und zu fixieren.

4. Bühne nach Anspruch 3, wobei auf der Trägerplatte (300) eine zweite Anschlagplatte (600) zur Begrenzung der Deckplatte (400) angeordnet ist.

5. Bühne nach Anspruch 4, wobei ein Winkel zwischen einer von dem Stützsubstrat (100) abgewandten Oberfläche der zweiten Anschlagplatte (600) und einer Oberfläche der Deckplatte (400) ein stumpfer Winkel ist.

6. Bühne nach einem der Ansprüche 3 bis 5, wobei eine Vielzahl von Öffnungen (410) in der Deckplatte (400) vorgesehen ist, um eine Vakuumadsorption bereitzustellen.

7. Bühne nach einem der Ansprüche 1 bis 6, ferner mit:
einer Rückgewinnungseinheit (90), die auf mindestens einer Seite des Stützsubstrats (100) angeordnet ist,
wobei die Rückgewinnungseinheit (90) konfiguriert ist, die Fremdstoffe auf dem Stützsubstrat (100) zurückzugewinnen.

8. Verarbeitungsvorrichtung, welche die Bühne nach einem der Ansprüche 1 bis 7 aufweist.

9. Schneidverfahren, angewandt auf die Bühne nach einem der Ansprüche 1 bis 7, aufweisend:
Platzieren eines zu schneidenden Objekts auf der Bühne und Durchführen eines Schneidvorgangs an dem Objekt;
Entfernen des Objekts, nachdem das Objekt geschnitten wurde; und
Steuern der Antriebseinheit (200), um das Stützsubstrat (100) zum Drehen anzutreiben, um Fremdkörper auf dem Stützsubstrat (100) zu entfernen.

10. Schneidverfahren nach Anspruch 9, ferner mit:
nachdem das Stützsubstrat (100) um mindestens einen voreingestellten Winkel gedreht worden ist, Durchführen mindestens einer Hin- und Her-Bewegung im Gegenuhrzeigersinn und/oder im Uhrzeigersinn in Bezug auf den mindestens einen voreingestellten Winkel.

11. Schneidverfahren nach Anspruch 10, wobei ein Wert des voreingestellten Winkels 20 Grad, 45 Grad, 85 Grad oder 95 Grad aufweist.

12. Schneidverfahren nach einem der Ansprüche 10 bis 11, wobei ein Auslenkungswinkel der Hin- und Her-Bewegung des Stützsubstrats (100) gegen den Uhrzeigersinn und/oder im Uhrzeigersinn nicht größer als 5 Grad ist.

## Revendications

1. Plate-forme pour processus de coupe, comprenant :
un substrat de support (100) ;
une unité d'entraînement (200) qui est disposée sur le substrat de support (100), dans laquelle l'unité d'entraînement (200) est configurée pour entraîner le substrat de support (100) en rotation autour d'une première direction (800) suivant une surface de panneau du substrat de support (100) de manière à enlever des matières étrangères sur le substrat de support (100),
**caractérisée par** :
une plaque de transport (300) qui est disposée sur le substrat de support (100) ; et
une courroie de convoyeur (700) qui est disposée sur le substrat de support (100),
dans laquelle la courroie de convoyeur (700) est configurée pour convoyer la plaque de transport (300).

2. Plate-forme selon la revendication 1, dans laquelle une première plaque d'arrêt (500) pour limiter la plaque de transport (300) est disposée sur le substrat de support (100).

3. Plate-forme selon l'une quelconque des revendications 1 - 2, comprenant en outre :
une plaque de recouvrement (400) qui est disposée sur la plaque de transport (300),
dans laquelle la plaque de recouvrement (400) est configurée pour supporter et fixer une plaque plane qui doit être coupée.

4. Plate-forme selon la revendication 3, dans laquelle une seconde plaque d'arrêt (600) pour limiter la plaque de recouvrement (400) est disposée sur la plaque de transport (300).

5. Plate-forme selon la revendication 4, dans laquelle un angle entre une surface de la seconde plaque d'arrêt (600) à distance du substrat de support (100) et une surface de la plaque de recouvrement (400) est un angle obtus.

6. Plate-forme selon l'une quelconque des revendications 3 - 5, dans laquelle une pluralité d'ouvertures (410) sont ménagées dans la plaque de recouvrement (400) pour permettre une adsorption sous vide.

7. Plate-forme selon l'une quelconque des revendications 1 - 6, comprenant en outre :
une unité de récupération (90) qui est disposée sur au moins un côté du substrat de support (100),
dans laquelle l'unité de récupération (90) est configurée pour récupérer les matières étrangères sur le substrat de support (100).

8. Appareil de processus, comprenant la plate-forme selon l'une quelconque des revendications 1 - 7.

9. Procédé de coupe appliqué à la plate-forme selon l'une quelconque des revendications 1-7, comprenant :
le positionnement d'un objet qui doit être coupé sur la plate-forme et la réalisation d'une opération de coupe sur l'objet ;
l'enlèvement de l'objet après que l'objet a été coupé ; et
la commande de l'unité d'entraînement (200) pour entraîner le substrat de support (100) en rotation afin d'enlever des matières étrangères sur le substrat de support (100).

10. Procédé de coupe selon la revendication 9, comprenant en outre :
après que le substrat de support (100) a été entraîné en rotation sur au moins un angle prédéfini, la réalisation d'au moins un mouvement en va-et-vient dans le sens inverse des aiguilles d'une montre et/ou dans le sens des aiguilles d'une montre par référence à l'au moins un angle prédéfini.

11. Procédé de coupe selon la revendication 10, dans lequel une valeur de l'angle prédéfini comprend 20 degrés, 45 degrés, 85 degrés ou 95 degrés.

12. Procédé de coupe selon l'une quelconque des revendications 10 - 11, dans lequel un angle de déviation du mouvement en va-et-vient dans le sens inverse des aiguilles d'une montre et/ou dans le sens des aiguilles d'une montre du substrat de support (100) n'est pas supérieur à 5 degrés.
